# EUROPÄISCHE PATENTSCHRIFT

(11) **EP 3 638 549 B1**
(45) Veröffentlichungstag und Bekanntmachung des Hinweises auf die Patenterteilung: **23.10.2024**
(21) Anmeldenummer: 18732002.3
(22) Anmeldetag: 11.06.2018
(51) Int. Cl.: B60R 21/0134

(54) **RÜCKHALTEVORRICHTUNG FÜR EIN FAHRZEUG**
RESTRAINT DEVICE FOR A VEHICLE
DISPOSITIF DE RETENUE POUR VÉHICULE

(30) Priorität: 12.06.2017 DE 102017209867
(43) Veröffentlichungstag der Anmeldung: 22.04.2020
(73) Patentinhaber: Volkswagen Aktiengesellschaft, 38440 Wolfsburg (DE)
(72) Erfinder: RYL, Axel, 31303 Burgdorf (DE)
(86) Internationale Anmeldenummer: PCT/EP2018/065372
(87) Internationale Veröffentlichungsnummer: WO 2018/229003

(56) Entgegenhaltungen:
- DE-A1- 102011 108 915
- DE-A1- 102011 122 203

## Beschreibung

Die Erfindung betrifft eine Rückhaltevorrichtung für ein Fahrzeug nach dem Patentanspruch 1 sowie ein Verfahren zum Rückhalten eines auf einem Fahrzeugsitz ruhenden Fahrzeuginsassen nach dem Patentanspruch 6.

Bei zweispurigen Fahrzeugen mit zumindest teilweise automatisierten Fahrfunktionen kann der Fahrer von der Fahraufgabe entbunden sein, so dass der Fahrer im Fahrzeug komfortable Sitzpositionen einnehmen kann, das heißt den Fahrzeugsitz nach hinten verstellen kann, und zwar bis hin zu einer Liegeposition. Für diese Sitzposition ist ein Insassenrückhaltesystem bereitzustellen, das dem Fahrzeuginsassen in einem Frontcrash eine einwandfreie Rückhaltewirkung gewährleistet.

Aus der DE 10 2014 002 187 A1 ist eine beispielhafte Rückhaltevorrichtung für ein Fahrzeug bekannt, mit der in einer Precrash-Phase vor einem möglichen Frontcrash-Zeitpunkt ein auf einem Fahrzeugsitz ruhender Fahrzeuginsasse von einer Komfortposition mit Hilfe eines Vorverlagerungsmittels in eine aufrechte Wirkposition aufrichtbar ist. Die Wirkposition ist so ausgelegt, dass im Crashfall ein am Fahrzeuginsassen angelegter Sicherheitsgurt eine optimale Rückhaltewirkung auf den angeschnallten Fahrzeuginsassen ausübt. Der in der DE 10 2014 002 187 A1 verwendete Sicherheitsgurt ist ein Drei-Punkt-Sicherheitsgurt mit einem Beckengurtanteil und einem Schultergurtanteil. Der Beckengurtanteil verläuft im angelegten Zustand zwischen seitlichen Anbindungspunkten quer über das Fahrzeuginsassen-Becken. Der Schultergurtanteil verläuft im angelegten Zustand diagonal über den Oberkörper des Fahrzeuginsassen bis zu einem oberen Anbindungspunkt. Zudem kann die Rückhaltevorrichtung einen elektronisch ansteuerbaren sowie elektromechanisch reversibel arbeitenden Gurtstraffer aufweisen, der im Crashfall den Fahrzeuginsassen mit einer vorgegebenen Rückhaltekraft fest gegen die Rückenlehne des Fahrzeugs sieht. Mittels des elektromechanisch reversiblen Gurtstraffers kann außerdem die auf dem Fahrzeuginsassen ausgeübte Rückhaltekraft auf ein vordefiniertes Kraftniveau begrenzt werden. Die Gurtkraftbegrenzung erfolgt unter Bereitstellung eines vordefinierten Gurtkraftbegrenzungsweges sowie unter Vorverlagerung des Fahrzeuginsassen.

Aus der DE 10 2015 004 798 A1 ist ein Verfahren zum Ansteuern eines Airbags bekannt, bei dem situationsbedingt das Auslösen des Airbags unterdrückt werden kann, sofern sich der Fahrzeuginsasse außerhalb des Airbag-Wirkbereiches befindet.

Aus der DE 10 2011 122 203 A1 und aus der DE 10 2011 108 915 A1 sind weitere Rückhaltevorrichtungen für Kraftfahrzeuge bekannt.

Die Aufgabe der Erfindung besteht darin, eine Rückhaltevorrichtung für ein Fahrzeug sowie ein Verfahren zum Rückhalten eines Fahrzeuginsassen bereitzustellen, das in einfacher Weise den Fahrzeuginsassen unabhängig von seiner Fahrzeugsitzposition im Frontcrashfall schützt.

Die Aufgabe ist durch die Merkmale des Anspruches 1 oder 6 gelöst. Bevorzugte Weiterbildungen der Erfindung sind in den Unteransprüchen offenbart.

Gemäß dem Patentanspruch 1 wird in der Precrash-Phase beim Aufrichten des Fahrzeuginsassen in seine aufrechte Wirkposition der elektromechanisch reversible Gurtstraffer deaktiviert und im Sicherheitsgurt eine Precrash-Gurtlose erzeugt. Dadurch wird ein für das Aufrichten des Fahrzeuginsassen erforderlicher Precrash-Gurtauszugsweg rückhaltekraftfrei bereitgestellt. Dadurch ist gewährleistet, dass der Fahrzeuginsasse während der Precrash-Phase verzögerungsfrei in seine aufrechte Wirkposition bewegbar ist. Mittels des elektromotorisch reversiblen Gurtstraffer wird in der PreCrash-Situation elektromotorisch Gurtband reversibel eingezogen. Im Crashfall wird pyrotechnisch der Gurtstraffer ausgelöst und zieht dieser Gurtband ein. Die Ansteuerung des Gurtes, in der Aufrichtphase des Insassen, kraftfrei zu sein und dann bei Erreichung der Wirkposition Gurt wieder "aktiv" geschaltet zu sein, muß über einen Gurtbandgeber bzw. über eine entsprechende Steuerungseinheit erfolgen.

Erfindungsgemäß ist das Vorverlagerungsmittel ein einer Rückenlehne des Fahrzeugsitzes integriertes aufblasbares Luftkissen. Das aufblasbare Kissen ist ein aktiver Bestandteil der Rückhaltevorrichtung und kann gegebenenfalls pneumatisch oder pyrotechnisch aufgeblasen werden. Das während der Precrash-Phase aufgeblasene Kissen wirkt als ein Impulsgeber zum Aufrichten des Fahrzeuginsassen in seine aufrechte Wirkposition.

Zur Unterstützung des Vorverlagerungsmittels (das heißt des Luftkissens) wird erfindungsgemäß während der Precrash-Phase zusätzlich die Rückenlehne des Fahrzeugs elektronisch angesteuert, damit durch eine zusätzliche Neigungsverstellung der Rückenlehne die Aufrichtbewegung des Fahrzeuginsassen beschleunigt wird.

Die erfindungsgemäße Rückhaltevorrichtung ist so ausgelegt, dass als Sicherheitsgurt bevorzugt ein herkömmlicher Drei-Punkt-Sicherheitsgurt einsetzbar ist, der im angelegten Zustand an einer Gurtzunge in einen Beckengurtanteil und einen Schultergurtanteil aufgeteilt ist. Der Beckengurtanteil verläuft im angelegten Zustand zwischen seitlichen Anbindungspunkten quer über das Fahrzeuginsassen-Becken, wobei die oben erwähnte Gurtzunge in Verbindung mit einem am Fahrzeugsitz oder an der Fahrzeugkarosserie befestigten Gurtschloss einen ersten lösbaren Anbindungspunkt bildet. Der seitlich gegenüberliegende zweite Anbindungspunkt des Beckengurtanteils kann mittels eines Endbeschlagstraffers ausgebildet sein, der im Crashfall zum Beispiel pyrotechnisch aktivierbar ist, um eine Gurtlose aus dem Beckengurtanteil zu ziehen, wodurch eine Beckenvorverlagerung reduziert wird. Der Schultergurtanteil des Sicherheitsgurtes kann sich ausgehend von der Gurtzunge im angelegten Zustand diagonal über den Oberkörper des Fahrzeuginsassen bis zu einem oberen Anbindungspunkt erstrecken und weiter bis zu dem elektromotorisch reversiblen Gurtstraffer geführt sein. Durch Bereitstellung des elektromotorisch reversiblen Gurtstraffers sowie des zum Beispiel pyrotechnisch aktivierbaren Endbeschlagstraffers ergibt sich eine Doppelstraffung.

Besonders bevorzugt ist es, wenn der Endbeschlagstraffer in der Precrash-Phase während der Aufrichtbewegung des Fahrzeuginsassen in seine aufrechte Wirkposition bereits aktiviert ist. Auf diese Weise ist eine einwandfreie Aufrechtbewegung des Fahrzeuginsassen gewährleistet, bei dem sich dessen Oberkörper durch Rotation nach fahrzeugvorne bewegt.

Die Aufrichtbewegung des Fahrzeuginsassen in seine aufrechte Wirkposition wird zudem unterstützt, wenn die Gurtzunge als Klemmsteckzunge realisiert ist. Eine solche Klemmsteckzunge weist ein Klemmelement auf, das zwischen einer Freigabestellung und einer Klemmstellung verstellbar ist. In der Freigabestellung kann der Sicherheitsgurt im normalen Fahrbetrieb frei durch die Gurtöse der Klemmsteckzunge hindurchrutschen. Im Crashfall befindet sich die Klemmsteckzunge dagegen in ihrer Klemmstellung, in der der Sicherheitsgurt festgeklemmt ist. Auf diese Weise kann sich in der Precrash-Phase die (mittels des elektromotorisch reversiblen Gurtstraffers) im Schultergurtanteil erzeugte Precrash-Gurtlose nicht auf den Beckengurtanteil übertragen. Der Beckengurtanteil bleibt gestrafft.

Die Rückhaltevorrichtung kann ferner ein Kopfaufschlag-Airbagmodul aufweisen, dessen Kopfaufschlagairbag den Insassenkopf im Crashfall vor einem Aufprall an einem Interieurbauteil (zum Beispiel einer Instrumententafel) schützt. Sofern die Rückhaltevorrichtung einen ausreichend großen Abstand zwischen dem Fahrzeuginsassen und dem Interieurbauteil detektiert, kann der Kopfaufschlagairbag bevorzugt deaktiviert bleiben. Auf diese Weise erhöht sich der in der Crashphase maximal verfügbare Gurtkraftbegrenzungsweg, über dem der Fahrzeuginsasse aufprallfrei nach vorne verlagerbar ist.

Erfindungsgemäß weist die Rückhaltevorrichtung eine Crasherkennungseinrichtung auf, mit deren Hilfe insbesondere durch Radar, Ultraschall-, Video- oder eine sonstige Abstandssensorik eine Precrash-Situation erfassbar ist. In Abhängigkeit von der erfassten Precrash-Situation kann der elektromotorisch reversible Gurtstraffer, das Vorverlagerungsmittel (das heißt das aufblasbare Kissen), der Endbeschlagstraffer sowie gegebenenfalls die Rückenlehne des Fahrzeugsitzes und das Kopfaufschlagairbagmodul elektronisch ansteuerbar sind, die allesamt Bestandteile des Insassenrückhaltesystems bilden können.

Nachfolgend ist ein Ausführungsbeispiel der Erfindung anhand der beigefügten Figuren beschrieben.

Es zeigen:
- Figur 1: eine schematische Seitenansicht eines Fahrzeuginnenraums eines zweispurigen Fahrzeugs, bei der sich ein Fahrer in seiner Normalsitzposition befindet;
- Figur 2: in einer schematischen Vorderansicht der Fahrersitz mit angelegtem Sicherheitsgurt, jedoch ohne Fahrer; und
- Figuren 3 bis 5: jeweils Ansichten entsprechend der Figur 1, die eine Precrash-Phase (Δt_{P} gemäß den Figuren 3 und 4) und eine Crash-Phase (Δtc gemäß der Figur 5) veranschaulichen.

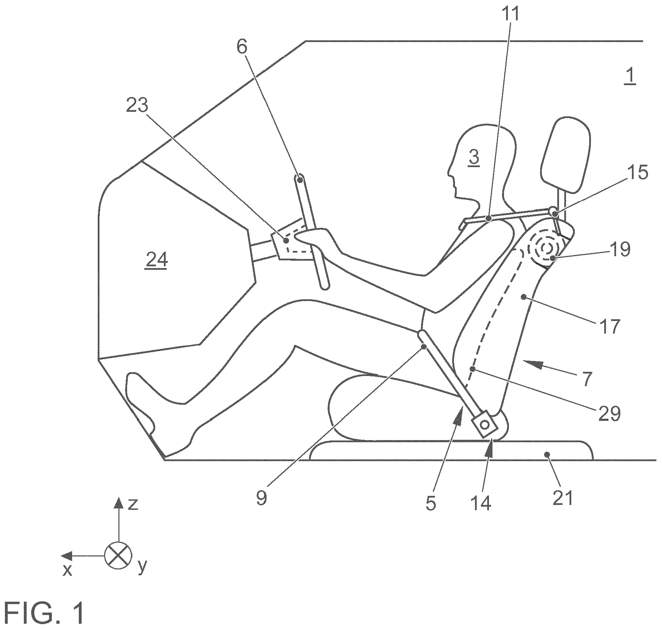

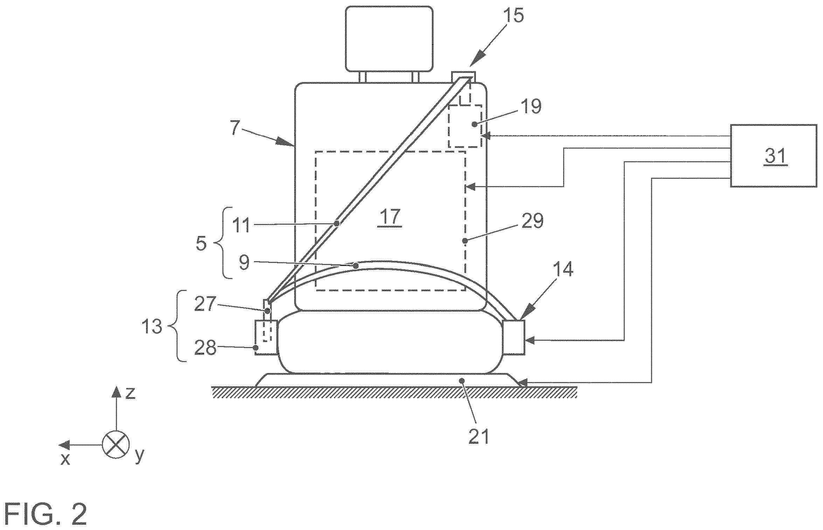

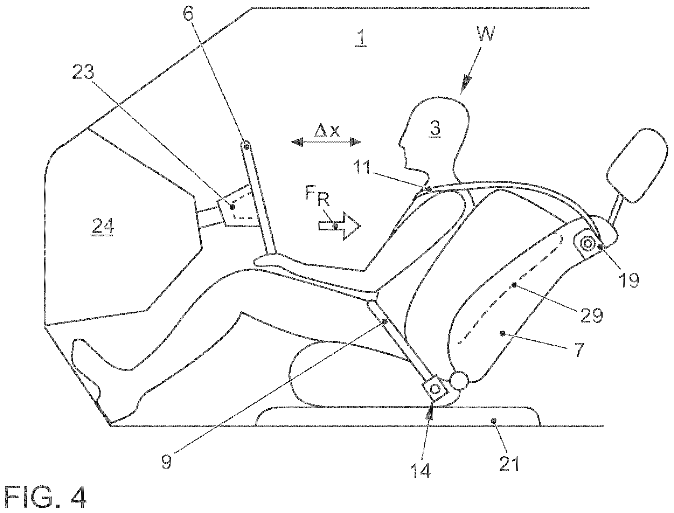

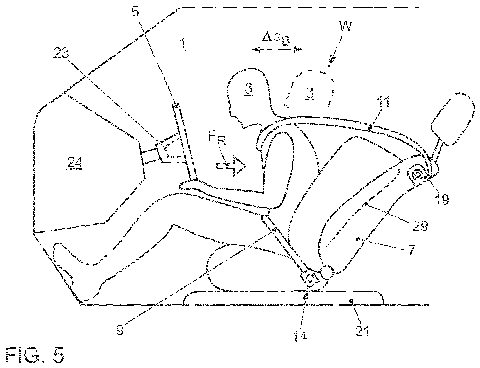

In der Figur 1 ist in einer Prinzipdarstellung ein Fahrzeuginnenraum 1 mit einem Fahrer 3 gezeigt, der über einen Sicherheitsgurt 5 am Fahrersitz 7 gesichert ist. Der Sicherheitsgurt 5 ist ein Drei-Punkt-Sicherheitsgurt, der aus einem Beckengurtanteil 9 und einem Schultergurtanteil 11 besteht. Der Beckengurtanteil 9 des Sicherheitsgurtes 6 verläuft zwischen bodenseitigen Anbindungspunkten 13, 14, von denen in der Figur 1 nur der Anbindungspunkt 14 gezeigt ist, der gemäß der Figur 2 über eine Gurtzunge 27 und ein Gurtschloss 28 lösbar ist. Der Schultergurtanteil 11 des Sicherheitsgurts 5 ist in Diagonalrichtung von dem in der Figur 2 gezeigten unteren Anlenkungspunkt 13 diagonal über den Brustkorbbereich des Fahrers 3 bis zu einem oberen Anbindungspunkt 15 geführt, der als ein Umlenkbeschlag an einem oberen Rand der Rückenlehne 17 des Fahrersitzes 7 ausgebildet ist. Der Schultergurtanteil 11 verläuft über den oberen Anbindungspunkt 15 hinaus weiter bis zu einem elektromotorisch reversiblen Gurtstraffer 19. Bei einer crashbedingten Aktivierung begrenzt der elektromotorisch reversible Gurtstraffer 19 eine auf den Fahrzeuginsassen 3 ausgeübte Rückhaltekraft F_{R} (Figuren 4 oder 5) auf ein vordefiniertes Kraftniveau, und zwar unter Vorverlagerung des Fahrzeuginsassen 3 um einen Gurtkraftbegrenzungsweg Δs_{B}.

Wie aus der Figur 1 weiter hervorgeht, ist eine nur angedeutete elektromotorisch betätigbare Verstelleinrichtung 21 vorgesehen, mit der sowohl der Fahrersitz 7 in der Fahrzeuglängsrichtung x verstellbar ist als auch dessen Rückenlehne 17 neigungsverstellbar ist. In einem Lenkrad 8 des Fahrzeugs ist ferner ein Kopfaufschlagairbagmodul 23 verbaut, dessen Kopfaufschlagairbag den Insassenkopf im Frontalcrashfall vor einem Aufprall auf der Instrumententafel 24 oder auf dem Lenkrad 8 schützt.

In der Figur 2 sind die beiden einander in der Fahrzeugquerrichtung y gegenüberliegenden Anbindungspunkte 13, 14 gezeigt, zwischen denen der Beckengurtanteil 9 verläuft. Der dem lösbaren Anbindungspunkt 13 gegenüberliegende Anbindungspunkt 14 ist als ein Endbeschlagstraffer realisiert, der in einem Crashfall eine Gurtlose aus dem Beckengurtanteil 9 zieht und somit eine crashbedingte Beckenvorverlagerung reduziert. Der detaillierte Aufbau eines solchen Endbeschlagstraffer ist dem Fachmann bekannt, beispielsweise aus der DE 10 2014 201 231 A1.

Die Gurtzunge 27 ist in den Figuren als eine Klemmsteckzunge realisiert, die in einem normalen Fahrbetrieb in einer Freigabestellung ist, in der der Sicherheitsgurt 6 frei durch die Klemmsteckzunge bewegbar geführt ist. Im Crashfall ist dagegen der Sicherheitsgurt 9 festgeklemmt. Der detaillierte Aufbau einer solchen Klemmsteckzunge ist dem Fachmann bekannt, beispielsweise aus der DE 42 15 384 A1 oder aus der DE 10 2013 216 326 A1.

Der Endbeschlagstraffer 14, der mechanisch reversible Gurtstraffer 19, das Kopfaufschlagairbagmodul 23 sowie ein in der Rückenlehne 17 integriertes Luftkissen 29 und die Sitz-Verstelleinrichtung 21 sind allesamt in ein Insassenrückhaltesystem eingebunden. Das Insassenrückhaltesystem weist eine in der Figur 2 angedeutete Crasherkennungseinrichtung 31 auf, die signaltechnisch mit dem mechanisch reversiblen Gurtstraffer 19, dem Endbeschlagstraffer 14, dem Luftkissen 29 sowie der Verstelleinrichtung 21 und dem Airbagmodul 23 verbunden ist. Die Crasherkennungseinrichtung 31 erfasst durch Radar, Ultraschall-, Video- oder sonstige Abstandssensorik eine Precrash-Situation. In Abhängigkeit von der erfassten Precrash-Situation können die oben genannten Komponenten des Insassenrückhaltesystems angesteuert werden, um den Fahrer 3 im Vorfeld eines nahenden Unfalls in eine günstige Position zu verbringen.

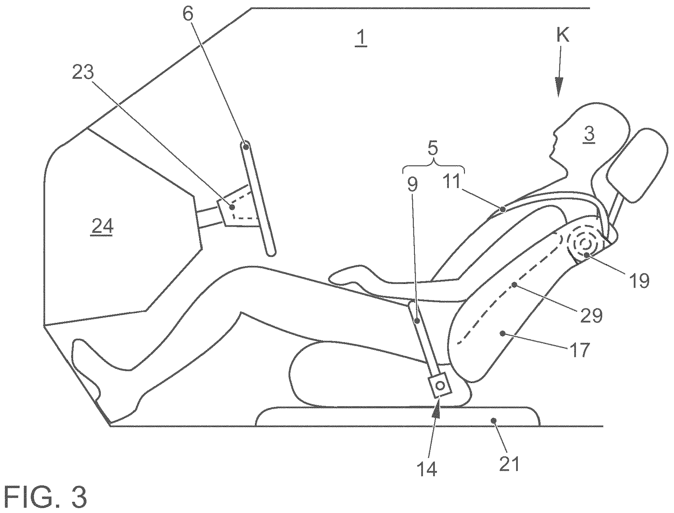

Nachfolgend wird anhand der Figuren 3 bis 5 die Funktionsweise des Rückhaltesystems erläutert: So befindet sich in der Figur 3 der auf dem Fahrersitz 7 ruhende Fahrer 3 in einer Komfortposition K, in der die Rückenlehne 17 nach hinten geklappt ist. Bei Erfassung einer kritischen Fahrsituation startet die Crasherkennungseinrichtung 31 eine Precrash-Phase Δt_{P}, in der das in der Rückenlehne 17 integrierte Luftkissen 29 aktiviert wird, um den Fahrer 3 von seiner Komfortposition K in eine aufrechte Wirkposition W (Figur 4) aufzurichten. Gleichzeitig mit der Ansteuerung des Luftkissens 29 wird auch der elektromotorisch reversible Gurtstraffer 19 deaktiviert, um eine Precrash-Gurtlose im Schultergurtanteil 11 des Sicherheitsgurtes 5 zu erzeugen. Dadurch wird ein für das Aufrichten des angeschnallten Fahrers 3 erforderlicher Precrash-Gurtauszugsweg rückhaltekraftfrei bereitgestellt. Die so erzeugte Precrash-Gurtlose darf sich nicht vom Schultergurtanteil 11 zum Beckengurtanteil 9 übertragen. Dies ist erfindungsgemäß verhindert durch die Ausführung der Gurtzunge 27 als eine Klemmsteckzunge, die das Durchrutschen des Sicherheitsgurtes durch eine Gurtöse der Klemmsteckzunge unterbindet. Dadurch ist ein Schultergurtanteil 11 des Sicherheitsgurtes 5 gelockert, während der Beckengurtanteil 9 des Sicherheitsgurtes 5 mittels der Klemmsteckzunge 27 blockiert ist.

Zudem wird in der Precrash-Phase Δt_{P} auch der Endbeschlagstraffer 14 aktiviert, um eine verzögerungsfreie Aufrichtbewegung des Fahrers 3 in seine aufrechte Wirkposition W zu unterstützen.

In der in der Figur 4 gezeigten aufrechten Wirkposition W ist eine einwandfreie Rückhaltewirkung des Drei-Punkt-Sicherheitsgurtes 9 gewährleistet. Der in der Precrash-Phase Δt_{P} noch deaktivierte elektromotorisch reversible Gurtstraffer 19 wird zum Crash-Zeitpunkt sowie in der darauffolgenden Crashphase Δt_{C} unmittelbar danach aktiviert, um eine Rückhaltewirkung auf den Fahrer 3 auszuüben, bei der der elektromotorisch reversible Gurtstraffer 19 die auf den Fahrer 3 ausgeübte Rückhaltekraft F_{R} auf ein vordefiniertes Kraftniveau begrenzt. Die Gurtkraftbegrenzung erfolgt unter Bereitstellung eines Crash-Gurtauszugsweges sowie unter Vorverlagerung des angeschnallten Fahrers 3 um einen Gurtkraftbegrenzungsweg Δs_{B} nach vorne.

Sofern mittels der Crasherkennungseinrichtung 31 ein ausreichend großer Abstand Δx (Figur 4) zwischen dem Fahrer 3 und der Instrumententafel 24 bzw. dem Lenkrad 8 detektiert worden ist, bleibt das Kopfaufschlagairbagmodul 23 deaktiviert. Auf diese Weise erhöht sich der in der Crashphase Δt_{C} maximal verfügbare Gurtkraftbegrenzungsweg, über den der Fahrer 3 aufprallfrei nach vorne verlagerbar ist.

### Bezugszeichenliste

- 1: Fahrzeuginnenraum
- 3: Fahrzeuginsasse
- 5: Sicherheitsgurt
- 6: Lenkrad
- 7: Fahrzeugsitz
- 9: Beckengurtanteil
- 11: Schultergurtanteil
- 13, 14: Gurtanbindungspunkte am Sitz
- 15: Gurtanbindungspunkt an der Rückenlehne
- 17: Rückenlehne
- 19: mechanisch reversibler Gurtstraffer
- 21: Verstelleinrichtung
- 23: Kopfaufschlagairbagmodul
- 24: Instrumententafel
- 27: Gurtzunge
- 28: Gurtschloss
- 29: Luftkissen
- 31: Crasherkennungseinrichtung
- K: Komfortposition
- W: Wirkposition
- Δs_{B}: Gurtkraftbegrenzungsweg
- F: Fahrtrichtung
- F_{R}: Rückhaltekraft
- Δt_{P}: Precrash-Phase
- Δt_{C}: Crash-Phase
- Δx: Abstand zwischen Fahrer und Interieurbauteil

## Patentansprüche

1. Rückhaltevorrichtung für ein Fahrzeug, mit der in einer Precrash-Phase (Δt_{P}) vor einem prognostizierten Frontcrash-Zeitpunkt (t_{F}) ein auf einem Fahrzeugsitz (7) ruhender Fahrzeuginsasse (3) von einer Komfortposition (K), in der eine Rückenlehne (17) des Fahrzeugsitzes (7) nach hinten geklappt ist, mittels eines Vorverlagerungsmittels (29) in eine aufrechte Wirkposition (W) aufrichtbar ist, in der in einer Crash-Phase (Δt_{C}) ein am Fahrzeuginsassen (3) angelegter Sicherheitsgurt (5) der Rückhaltevorrichtung eine Rückhaltewirkung auf den Fahrzeuginsassen (3) ausübt, bei der ein elektromotorisch reversibler Gurtstraffer (19) der Rückhaltevorrichtung aktiviert ist, um die auf den Fahrzeuginsassen (3) ausgeübte Rückhaltekraft (F_{R}) auf ein vordefiniertes Kraftniveau zu begrenzen, und zwar unter Vorverlagerung des Fahrzeuginsassen (3) um einen Gurtkraftbegrenzungsweg (Δs_{B}), wobei in der Precrash-Phase (Δt_{P}) beim Aufrichten des Fahrzeuginsassen (3) in seine Wirkposition (Vη der elektromotorisch reversible Gurtstraffer (19) eine Precrash-Gurtlose erzeugt, um den für das Aufrichten des Fahrzeuginsassen (3) erforderlichen Precrash-Gurtauszugsweg rückhaltekraftfrei bereitzustellen, wobei das Vorverlagerungsmittel (29) ein in einer Rückenlehne (17) des Fahrzeugsitzes (7) integriertes aufblasbares Kissen ist, das in der Precrash-Phase (Δt_{P}) aufgeblasen wird und als ein Impulsgeber zum Aufrichten des Fahrzeuginsassen (3) in die Wirkposition (Vη wirkt, wobei zur Unterstützung des Vorverlagerungsmittels (29) zusätzlich die Rückenlehne (17) des Fahrzeugsitzes (7) angesteuert wird, um durch Neigungsverstellung der Rückenlehne (17) das Aufrichten des Fahrzeuginsassen (3) in die aufrechte Wirkposition (Vη zu beschleunigen, und wobei die Rückhaltevorrichtung eine Crasherkennungseinrichtung (31) aufweist.

2. Rückhaltevorrichtung nach Anspruch 1, **dadurch gekennzeichnet, dass** der Sicherheitsgurt (5) ein Drei-Punkt-Sicherheitsgurt mit einem Beckengurtanteil (9) und einem Schultergurtanteil (11) ist, wobei der Beckengurtanteil (9) im angelegten Zustand zwischen seitlichen Anbindungspunkten (13, 14) quer über das Fahrzeuginsassen-Becken verläuft, von denen ein erster Anbindungspunkt (13) als eine Gurtschloss-Gurtzungen-Verbindung lösbar ausgebildet ist, und dass der Schultergurtanteil (11) im angelegten Zustand diagonal über den Fahrzeuginsassen-Oberkörper bis zu einem oberen Anbindungspunkt (15) und weiter zum elektromotorisch reversiblen Gurtstraffer (19) verläuft, und dass der zweite Anbindungspunkt (14) des Beckengurtanteils (9) als ein pyrotechnisch aktivierbarer Endbeschlagstraffer ausgebildet ist, der im Crashfall eine Gurtlose aus dem Beckengurtanteil (9) zieht und somit eine Beckenvorverlagerung reduziert.

3. Rückhaltevorrichtung nach Anspruch 2, **dadurch gekennzeichnet, dass** der Endbeschlagstraffer (14) bereits in der Precrash-Phase (Δt_{P}) während der Aufrichtbewegung des Fahrzeuginsassen (3) in seine Wirkposition (W) aktiviert ist, um eine einwandfreie Aufrichtbewegung des Fahrzeuginsassen (3) in die Wirkposition (W) zu gewährleisten.

4. Rückhaltevorrichtung nach Anspruch 2 oder 3, **dadurch gekennzeichnet, dass** die Gurtzunge (27) eine Klemmsteckzunge ist, die ein Klemmelement aufweist, das zwischen einer Freigabestellung, in der der Sicherheitsgurt (5) frei bewegbar durch die Klemmsteckzunge geführt ist, und einer Klemmstellung verstellbar ist, in der der Sicherheitsgurt (5) im Crashfall festgeklemmt ist, so dass sich in der Precrash-Phase (Δt_{P}) die im Schultergurtanteil (11) erzeugte Precrash-Gurtlose nicht auf den Beckengurtanteil (9) überträgt.

5. Rückhaltevorrichtung nach einem der vorhergehenden Ansprüche, **dadurch gekennzeichnet, dass** die Rückhaltevorrichtung ein Kopfaufschlagairbagmodul (23) aufweist, dessen Kopfaufschlagairbag den Insassenkopf im Crashfall vor einem Aufprall an einem Interieurbauteil (8, 24) schützt, und dass bei einem von der Rückhaltevorrichtung detektierten ausreichend großen Abstand zwischen dem Fahrzeuginsassen (3) und dem Interieurbauteil (8, 24) der Kopfaufschlagairbag deaktiviert bleibt, wodurch sich der in der Crashphase (Δtc) maximal verfügbare Gurtkraftbegrenzungsweg (Δs_{B}) erhöht.

6. Verfahren zum Rückhalten eines auf einem Fahrzeugsitz (7) ruhenden Fahrzeuginsassen (3) mittels einer Rückhaltevorrichtung nach einem der vorhergehenden Ansprüche, bei dem in einer Precrash-Phase (Δt_{P}) vor einem prognostizierten Frontcrash-Zeitpunkt (t_{F}) ein auf einem Fahrzeugsitz (7) ruhender Fahrzeuginsasse (3) von einer Komfortposition (K) mittels eines Vorverlagerungsmittels (29) in eine aufrechte Wirkposition (W) aufgerichtet wird, in der in einer Crash-Phase (Δtc) ein am Fahrzeuginsassen (3) angelegter Sicherheitsgurt (5) eine Rückhaltewirkung auf den Fahrzeuginsassen (3) ausübt, bei der ein elektromotorisch reversibler Gurtstraffer (19) aktiviert ist, um die auf den Fahrzeuginsassen (3) ausgeübte Rückhaltekraft (F_{R}) auf ein vordefiniertes Kraftniveau zu begrenzen, und zwar unter Vorverlagerung des Fahrzeuginsassen (3) um einen Gurtkraftbegrenzungsweg (Δs_{B}), wobei in der Precrash-Phase (Δt_{P}) beim Aufrichten des Fahrzeuginsassen (3) in seine Wirkposition (W) der elektromotorisch reversible Gurtstraffer(19) eine Precrash-Gurtlose erzeugt, um den für das Aufrichten des Fahrzeuginsassen (3) erforderlichen Precrash-Gurtauszugsweg rückhaltekraftfrei bereitzustellen, wobei das Vorverlagerungsmittel (29) ein in einer Rückenlehne (17) des Fahrzeugsitzes (7) integriertes aufblasbares Kissen ist, das in der Precrash-Phase (Δt_{P}) aufgeblasen wird und als ein Impulsgeber zum Aufrichten des Fahrzeuginsassen (3) in die Wirkposition wirkt, und wobei zur Unterstützung des Vorverlagerungsmittels (29) zusätzlich die Rückenlehne (17) des Fahrzeugsitzes (7) angesteuert wird, um durch Neigungsverstellung der Rückenlehne (17) das Aufrichten des Fahrzeuginsassen (3) in die aufrechte Wirkposition (W) zu beschleunigen.

## Claims

1. Restraining device for a vehicle, by means of which, in a pre-crash phase (Δt_{P}) before a predicted frontal crash time (t_{F}), a vehicle occupant (3) resting on a vehicle seat (7) can be raised from a comfort position (K), in which a backrest (17) of the vehicle seat (7) is folded backwards, by means of a forward displacement means (29) into an upright active position (W) in which, in a crash phase (Δtc), a seat belt (5) of the restraining device fastened to the vehicle occupant (3) exerts a restraining effect on the vehicle occupant (3), in which an electromotively reversible belt tensioner (19) of the restraining device is activated in order to limit the restraining force (F_{R}) acting on the vehicle occupant (3) to a predefined force level, namely by forward displacement of the vehicle occupant (3) by a belt force limiting distance (Δs_{B}), wherein, in the pre-crash phase (Δt_{P}), when the vehicle occupant (3) is raised into the active position (W), the electromotively reversible belt tensioner (19) generates a pre-crash belt slack in order to provide the pre-crash belt extension distance required for the vehicle occupant (3) to be raised without any restraining force, wherein the forward displacement means (29) is an inflatable cushion integrated in a backrest (17) of the vehicle seat (7), which cushion inflates in the pre-crash phase (Δt_{P}) and acts as a pulse generator for raising the vehicle occupant (3) into the active position (W), wherein, to assist the forward displacement means (29), the backrest (17) of the vehicle seat (7) is additionally actuated in order to accelerate the raising of the vehicle occupant (3) into the upright active position (W) by adjusting the inclination of the backrest (17), and wherein the restraining device has a crash detection apparatus (31).

2. Restraining device according to claim 1, **characterized in that** the seat belt (5) is a three-point seat belt with a lap belt portion (9) and a shoulder belt portion (11), the lap belt portion (9) extending in the fastened state between lateral attachment points (13, 14) across the vehicle occupant's pelvis, of which a first attachment point (13) is designed as a detachable belt buckle-belt tongue connection, **and in that** the shoulder belt portion (11) extends in the fastened state diagonally across the vehicle occupant's torso to an upper attachment point (15) and further to the electromotively reversible belt tensioner (19), **and in that** the second attachment point (14) of the lap belt portion (9) is designed as a pyrotechnically activatable end fitting tensioner which, in the event of a crash, pulls a belt slack out of the lap belt portion (9) and therefore reduces a forward displacement of the pelvis.

3. Restraining device according to claim 2, **characterized in that** the end fitting tensioner (14) is already activated in the pre-crash phase (Δt_{P}) during the raising movement of the vehicle occupant (3) into the active position (W) in order to ensure a smooth raising movement of the vehicle occupant (3) into the active position (W).

4. Restraining device according to claim 2 or 3, **characterized in that** the belt tongue (27) is a clamping tongue which has a clamping element that can be adjusted between a release position in which the seat belt (5) is guided so as to be freely movable through the clamping tongue, and a clamping position in which the seat belt (5) is clamped in the event of a crash such that, in the pre-crash phase (Δt_{P}), the pre-crash belt slack generated in the shoulder belt portion (11) is not transferred to the lap belt portion (9).

5. Restraining device according to any of the preceding claims,
**characterized in that** the restraining device has a head impact airbag module (23), the head impact airbag of which protects the occupant's head from an impact with an interior component (8, 24) in the event of a crash, **and in that** if the restraining device detects a sufficiently large distance between the vehicle occupant (3) and the interior component (8, 24), the head impact airbag remains deactivated, which increases the maximum available belt force limiting distance (Δs_{B}) in the crash phrase (Δtc).

6. Method for restraining a vehicle occupant (3) resting on a vehicle seat (7) by means of a restraining device according to any of the preceding claims, in which, in a pre-crash phase (Δt_{P}) before a predicted frontal crash time (t_{F}), a vehicle occupant (3) resting on a vehicle seat (7) is raised from a comfort position (K) by means of a forward displacement means (29) into an upright active position (W) in which, in a crash phase (Δtc), a seat belt (5) fastened to the vehicle occupant (3) exerts a restraining effect on the vehicle occupant (3), in which an electromotively reversible belt tensioner (19) is activated in order to limit the restraining force (F_{R}) acting on the vehicle occupant (3) to a predefined force level, namely by forward displacement of the vehicle occupant (3) by a belt force limiting distance (Δs_{B}), wherein, in the pre-crash phase (Δt_{P}), when the vehicle occupant (3) is raised into the active position (W), the electromotively reversible belt tensioner (19) generates a pre-crash belt slack in order to provide the pre-crash belt extension distance required for the vehicle occupant (3) to be raised without any restraining force, wherein the forward displacement means (29) is an inflatable cushion integrated in a backrest (17) of the vehicle seat (7), which cushion inflates in the pre-crash phase (Δt_{P}) and acts as a pulse generator for raising the vehicle occupant (3) into the active position (W), and wherein, to assist the forward displacement means (29), the backrest (17) of the vehicle seat (7) is additionally actuated in order to accelerate the raising of the vehicle occupant (3) into the upright active position (W) by adjusting the inclination of the backrest (17).

## Revendications

1. Dispositif de retenue pour un véhicule, avec lequel, dans une phase de précollision (Δt_{P}) avant un moment de collision frontale (t_{F}) prévu, un occupant du véhicule (3) se reposant sur un siège de véhicule (7) peut être redressé à l'aide d'un moyen de déplacement vers l'avant (29) d'une position de confort (K), dans laquelle un dossier (17) du siège de véhicule (7) est rabattu vers l'arrière, vers une position active (W) verticale, dans laquelle, dans une phase de collision (Δtc), une ceinture de sécurité (5) du dispositif de retenue posée sur l'occupant du véhicule (3) exerce un effet de retenue sur l'occupant du véhicule (3), lors duquel un tendeur de ceinture (19) réversible par moteur électrique du dispositif de retenue est activé, afin de limiter la force de retenue (F_{R}) exercée sur l'occupant du véhicule (3) à un niveau de force prédéfini, et ce en déplaçant l'occupant du véhicule (3) vers l'avant d'une course de limitation de force de ceinture (Δs_{B}), dans lequel, dans la phase de précollision (Δt_{P}), lors du redressement de l'occupant du véhicule (3) dans sa position active (W), le tendeur de ceinture (19) réversible par moteur électrique génère un mou de ceinture de précollision afin de mettre à disposition sans force de retenue la course d'extraction de ceinture de précollision nécessaire pour le redressement de l'occupant du véhicule (3), dans lequel le moyen de déplacement vers l'avant (29) est un coussin gonflable intégré dans un dossier (17) du siège de véhicule (7) qui est gonflé dans la phase de précollision (Δt_{P}) et agit comme un générateur d'impulsions pour redresser l'occupant du véhicule (3) dans la position active (W), dans lequel, pour assister le moyen de déplacement vers l'avant (29), le dossier (17) du siège de véhicule (7) est en outre commandé afin d'accélérer le redressement de l'occupant du véhicule (3) dans la position active (W) verticale par un réglage de l'inclinaison du dossier (17), et dans lequel le dispositif de retenue présente un appareil de détection de collision (31).

2. Dispositif de retenue selon la revendication 1, **caractérisé en ce que** la ceinture de sécurité (5) est une ceinture de sécurité à trois points comportant une partie de ceinture pour bassin (9) et une partie de ceinture pour épaule (11), dans lequel la partie de ceinture pour bassin (9) s'étend, à l'état posé, entre des points d'attache (13, 14) latéraux transversalement sur le bassin de l'occupant du véhicule, parmi lesquels un premier point d'attache (13) est conçu de manière amovible en tant qu'attache boucle de ceinture-languette de ceinture, et **en ce que** la partie de ceinture pour épaule (11) s'étend, à l'état posé, en diagonale sur la partie supérieure du corps de l'occupant du véhicule jusqu'à un point d'attache supérieur (15) et plus loin jusqu'au tendeur de ceinture (19) réversible par moteur électrique, et **en ce que** le deuxième point d'attache (14) de la partie de ceinture pour bassin (9) est conçu en tant que tendeur de ferrure d'extrémité activable par voie pyrotechnique, lequel, en cas de collision, tire un mou de ceinture hors de la partie de ceinture pour bassin (9) et réduit ainsi un déplacement vers l'avant du bassin.

3. Dispositif de retenue selon la revendication 2, **caractérisé en ce que** le tendeur de ferrure d'extrémité (14) est déjà activé dans la phase de précollision (Δt_{P}) pendant le mouvement de redressement de l'occupant du véhicule (3) dans sa position active (W) afin de garantir un mouvement de redressement parfait de l'occupant du véhicule (3) dans la position active (W).

4. Dispositif de retenue selon la revendication 2 ou 3, **caractérisé en ce que** la languette de ceinture (27) est une languette de serrage enfichable qui présente un élément de serrage, lequel peut être réglé entre une position de libération, dans laquelle la ceinture de sécurité (5) est guidée de manière à pouvoir se déplacer librement par la languette de serrage enfichable, et une position de serrage, dans laquelle la ceinture de sécurité (5) est serrée fixement en cas de collision, de sorte que, dans la phase de précollision (Δt_{P}), le mou de ceinture de précollision généré dans la partie de ceinture pour bassin (11) ne se transmet pas à la partie de ceinture pour bassin (9).

5. Dispositif de retenue selon l'une des revendications précédentes, **caractérisé en ce que** le dispositif de retenue présente un module de coussin de sécurité gonflable contre l'impact de tête (23), dont le coussin de sécurité contre l'impact de tête protège la tête de l'occupant, en cas de collision, contre un choc avec un élément d'intérieur (8, 24), **et en ce que,** dans le cas d'une distance suffisamment grande entre l'occupant du véhicule (3) et l'élément d'intérieur (8, 24), laquelle est détectée par le dispositif de retenue, le coussin de sécurité contre l'impact de tête reste désactivé, moyennant quoi la course de limitation de force de ceinture (Δs_{B}) maximale disponible dans la phase de collision (Δtc) augmente.

6. Procédé permettant la retenue d'un occupant de véhicule (3) se reposant sur un siège de véhicule (7) au moyen d'un dispositif de retenue selon l'une des revendications précédentes, dans lequel, dans une phase de précollision (Δt_{P}) avant un moment de collision frontale (t_{F}) prévu, un occupant du véhicule (3) se reposant sur un siège de véhicule (7) est redressé d'une position de confort (K) vers une position active (W) verticale au moyen d'un moyen de déplacement vers l'avant (29), dans laquelle position active, dans une phase de collision (Δtc), une ceinture de sécurité (5) posée sur l'occupant du véhicule (3) exerce un effet de retenue sur l'occupant du véhicule (3), lors duquel un tendeur de ceinture (19) réversible par moteur électrique est activé afin de limiter la force de retenue (F_{R}) exercée sur l'occupant du véhicule (3) à un niveau de force prédéfini, et ce en déplaçant l'occupant du véhicule (3) vers l'avant d'une course de limitation de force de ceinture (Δs_{B}), dans lequel, dans la phase de précollision (Δt_{P}), lors du redressement de l'occupant du véhicule (3) dans sa position active (W), le tendeur de ceinture (19) réversible par moteur électrique génère un mou de ceinture de précollision, afin de mettre à disposition sans force de retenue la course d'extraction de ceinture de précollision nécessaire pour le redressement de l'occupant du véhicule (3), dans lequel le moyen de déplacement vers l'avant (29) est un coussin gonflable intégré dans un dossier (17) du siège de véhicule (7) qui est gonflé dans la phase de précollision (Δt_{P}) et agit comme un générateur d'impulsions pour redresser l'occupant du véhicule (3) dans la position active (W), et dans lequel, pour assister le moyen de déplacement vers l'avant (29), le dossier (17) du siège de véhicule (7) est en outre commandé afin d'accélérer le redressement de l'occupant du véhicule (3) dans la position active (W) verticale par un réglage de l'inclinaison du dossier (17).
